# EUROPÄISCHE PATENTSCHRIFT

(11) **EP 2 026 896 B1**
(45) Veröffentlichungstag und Bekanntmachung des Hinweises auf die Patenterteilung: **03.08.2016**
(21) Anmeldenummer: 07729052.6
(22) Anmeldetag: 11.05.2007
(51) Int. Cl.: B01D 53/14, B01D 53/62

(54) **KOHLENDIOXID-ABSORPTIONSMITTEL MIT VERRINGERTEM REGENERATIONS-ENERGIEBEDARF**
CARBON DIOXIDE ABSORBENT REQUIRING LESS REGENERATION ENERGY
AGENT D'ABSORPTION DE DIOXYDE DE CARBONE AYANT DES BESOINS EN ÉNERGIE DE RÉGÉNÉRATION LIMITÉS

(30) Priorität: 18.05.2006 EP 06114183; 14.09.2006 EP 06120708
(43) Veröffentlichungstag der Anmeldung: 25.02.2009
(73) Patentinhaber: BASF SE, 67056 Ludwigshafen am Rhein (DE)
(72) Erfinder: ASPRION, Norbert, 67063 Ludwigshafen (DE); CLAUSEN, Iven, 68199 Mannheim (DE); LICHTFERS, Ute, 76187 Karlsruhe (DE); WAGNER, Rupert, 67551 Worms (DE)
(86) Internationale Anmeldenummer: PCT/EP2007/054600
(87) Internationale Veröffentlichungsnummer: WO 2007/134994

(56) Entgegenhaltungen:
- EP-A- 0 671 200
- EP-A1- 0 125 358
- US-A- 4 073 863
- US-A- 6 036 931

## Beschreibung

Die vorliegende Erfindung betrifft ein Absorptionsmittel und ein Verfahren zum Entfernen von Kohlendioxid aus Gasströmen.

Die Entfernung von Sauergasen, wie z.B. CO₂, H₂S, SO₂, CS₂, HCN, COS oder Merkaptanen, aus Fluidströmen, wie Erdgas, Raffineriegas, Synthesegas, ist aus unterschiedlichen Gründen von Bedeutung. Kohlendioxid muss beispielsweise aus Erdgas entfernt werden, da eine hohe Konzentration an CO₂ den Brennwert des Gases reduziert. Außerdem kann CO₂ in Verbindung mit Feuchtigkeit, die in den Fluidströmen häufig mitgeführt wird, zu Korrosion an Leitungen und Armaturen führen. Der Gehalt an Schwefelverbindungen von Erdgas muss durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übel riechend und, vor allem Schwefeldioxid, toxisch.

Die Entfernung von Kohlendioxid aus Rauchgasen ist aus verschiedenen Gründen wünschenswert, insbesondere aber zur Verminderung der Emission von Kohlendioxid, die als Hauptursache für den so genannten Treibhauseffekt angesehen wird.

Im industriellen Maßstab werden zur Entfernung von Sauergasen, wie Kohlendioxid, aus Fluidströmen häufig wässrige Lösungen organischer Basen, z. B. Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wieder verwendet werden.

Rauchgase weisen sehr geringe Kohlendioxid-Partialdrücke auf, da sie in der Regel bei einem Druck nahe dem Atmosphärendruck anfallen und typischerweise 3 bis 13 Vol.-% Kohlendioxid enthalten. Um eine wirksame Entfernung von Kohlendioxid zu erreichen, muss das Absorptionsmittel eine hohe Sauergas-Affinität aufweisen, was in der Regel bedeutet, dass die Kohlendioxid-Absorption stark exotherm verläuft. Andererseits bedingt der hohe Betrag der Absorptionsreaktionsenthalpie einen erhöhten Energieaufwand bei der Regeneration des Absorptionsmittels.

Dan G. Chapel et al. empfehlen daher in ihrem Vortrag "Recovery of CO2 from Flue Gases: Commercial Trends" (vorgetragen beim Jahrestreffen der Canadian Society of Chemical Engineers, 4-6. Oktober, 1999, Saskatoon, Saskatchewan, Kanada), zur Minimierung der erforderlichen Regenerationsenergie ein Absorptionsmittel mit relativ niedriger Reaktionsenthalpie auszuwählen.

Auch in anderen Gaswäscheanwendungen ist eine Minimierung der erforderlichen Regenerationsenergie wünschenswert.

Die GB 1 543 748 beschreibt ein Verfahren zur Entfernung von CO₂ und H₂S aus einem Crackgas unter Verwendung einer wässrigen Lösung eines Alkalimetallsalzes einer N-Dialkyl-α-aminomonocarbonsäure, wie Dimethylglycin.

Die US-A 4,094,957 offenbart die Entfernung von CO₂ aus Gasströmen mit einer Absorptionslösung, die ein basisches Alkalimetallsalz, ein sterisch gehindertes Amin und eine Aminosäure wie N,N-Dimethylglycin, enthält.

Die EP-A 671 200 beschreibt die Entfernung von CO₂ aus Verbrennungsgasen bei Atmosphärendruck mit einer wässrigen Lösung eines Aminosäuremetallsalzes und Piperazin.

Die EP 0 125 358 A1 beschreibt eine wässrige Absorptionslösung, die ein basisches Alkalimetallsalz oder -hydroxid und ein Aktivator- oder Promotorsystem für das basische Alkalimetallsalz oder -hydroxid enthält. Das Aktivator- oder Promotorsystem enthält mindestens eine nicht sterisch gehinderte Aminverbindung und mindetsens eine sterisch gehinderte Aminosäure.

Das US-Patent Nr. 6,036,931 beschreibt eine wässrige Lösung von Aminoverbindungen. Es sind 100 Gewichtsanteile einer unter 2-Amino-2-methyl-1,3-propandiol, 2-Amino-2-methyl-1-propanol, 2-Amino-2-ethyl-1,3-propandiol, t-Butyldiethanolamin und 2-Amino-2-hydroxymethyl-1,3-propandiol ausgewählten Aminverbindung und 1-25 Gewichtsanteile einer unter Piperazin, Piperidin, Morpholin, Glycin, 2-Methylaminoethanol, 2-Piperidinethanol and 2-Ethylaminoethanol ausgewählten Aminverbindung enthalten.

Der Erfindung liegt die Aufgabe zu Grunde, ein Verfahren anzugeben, das eine weitgehende Entfernung von Kohlendioxid aus Fluidströmen gestattet und bei dem die Regeneration des Absorptionsmittels mit vergleichsweise geringem Energieaufwand möglich ist.

Die Aufgabe wird gelöst durch ein Absorptionsmittel zum Entfernen von Kohlendioxid aus einem Fluidstrom, das eine wässrige Lösung
(A) wenigstens eines Amins und
(B) wenigstens einer Aminocarbonsäure umfasst;
wobei die wässrige Lösung weniger als 5 Gew.-% anorganische basische Salze enthält und die Aminocarbonsäure unter N-Mono-C₁-C₄-alkyl-aminocarbonsäuren und N,N-Di-C₁-C₄-alkyl-aminocarbonsäuren ausgewählt ist, oder die Aminocarbonsäure eine α-Aminocarbonsäure ist, worin das α-Kohlenstoffatom nur von Wasserstoff verschiedene Substituenten trägt.

Im Allgemeinen enthält das Absorptionsmittel, bezogen auf das Gewicht des Absorptionsmittels,
(A) 10 bis 65 Gew.-%, vorzugsweise 20 bis 40 Gew.-%, eines Amins oder einer Kombination von Aminen und
(B) 1 bis 40 Gew.-%, vorzugsweise 10 bis 30 Gew.-%, wenigstens einer Aminocarbonsäure.

Die Erfindung betrifft auch ein Verfahren zum Entfernen von Kohlendioxid aus einem Fluidstrom, wie einem Gasstrom, wobei man den Fluidstrom mit dem vorstehend definierten Absorptionsmittel in Kontakt bringt.

In einer bevorzugten Ausführungsform des Verfahrens beträgt der Partialdruck des Kohlendioxids im Gasstrom weniger als 200 mbar, meist 20 bis 150 mbar.

Im Allgemeinen beträgt der Gesamtdruck (absoluter Druck) im Absorptionsschritt 1 bis 120 bar. In einer bevorzugten Ausführungsform des Verfahrens beträgt der Gesamtdruck im Absorptionsschritt wenigstens 5 bar, besonders bevorzugt 10 bis 100 bar.

Die Aminocarbonsäure liegt in der wässrigen Lösung in freier Form (d. h. zwitterionischer Form) oder als Ammoniumsalz des Amins (A) vor. Die wässrige Lösung enthält im Wesentlichen kein Metallsalz der Aminocarbonsäure.

Die wässrige Lösung enthält weniger als 5 Gew.-% anorganische basische Salze. Anorganische basische Salze sind beispielsweise Alkalimetall- oder Erdalkalimetallcarbonate oder -hydrogencarbonate, wie insbesondere Kaliumcarbonat (Pottasche).

Die Verringerung der Regenerationsenergie durch Mitverwendung einer Aminocarbonsäure beruht vermutlich auf folgenden Zusammenhängen: Aminosäuren sind amphotere Verbindungen. Ihre Säurestärke (ausgedrückt durch den pKs-Wert) ist temperaturabhängig, wobei die Aminosäuren bei höheren Temperaturen stärker sauer wirken als bei niedrigeren Temperaturen. Da die Regeneration des Absorptionsmittels üblicherweise bei höherer Temperatur stattfindet als die CO₂-Absorption, unterstützt der stärker saure Charakter der Aminosäure die CO₂-Freisetzung aus dem beladenen Absorptionsmittel, wodurch der zur Regeneration erforderliche Energiebedarf verringert wird. Bei niedrigeren Temperaturen verhalten sich die Aminosäuren neutral oder nur schwach sauer, so dass die Absorptionskapazität bei niedrigeren Temperaturen nicht oder nur wenig beeinflusst wird.

Aminocarbonsäuren enthalten wenigstens eine Aminogruppe und wenigstens eine Carboxylgruppe in ihrer Molekülstruktur. Das Stickstoffatom der Aminogruppe kann durch C₁-C₄-Alkylgruppen einfach oder zweifach substituiert sein. Geeignete Aminocarbonsäuren enthalten üblicherweise 2 bis 12 Kohlenstoffatome, z. B. 4 bis 12 Kohlenstoffatome.

### Geeignete Aminocarbonsäuren sind beispielsweise

α-Aminosäuren, wie N-Methylglycin (N-Methylaminoessigsäure, Sarkosin), N,N-Dimethylglycin (Dimethylaminoessigsäure), N-Ethylglycin, N,N-Diethylglycin, N-Methylalanin (2-(Methylamino)-propionsäure), N,N-Dimethylalanin, N-Ethylalanin, 2-Methylalanin (2-Aminoisobuttersäure), N-Methylleucin, N,N-Dimethylleucin, N-Methyl-isoleucin, N,N-Dimethylisoleucin, α-Methylvalin (2-Amino-2-methylisovaleriansäure), N-Methylvalin (2-Methylaminoisovaleriansäure), N,N-Dimethylvalin, N-Methylprolin, N-Methylserin, N,N-Dimethylserin, 2-(Methylamino)-isobuttersäure, N-Methyl-piperidin-2-carbonsäure,
β-Aminosäuren, wie 3-Methylaminopropionsäure, 3-Dimethylaminopropionsäure, N-Methyliminodipropionsäure, N-Methyl-piperidin-3-carbonsäure,
oder Aminocarbonsäuren wie N-Methyl-piperidin-4-carbonsäure, 4-Methylaminobuttersäure, 4-Dimethylaminobuttersäure.

Wenn die Aminocarbonsäure ein oder mehrere chirale Kohlenstoffatome aufweist, ist die Konfiguration unbeachtlich; es können sowohl die reinen Enantiomere/Diastereomere als auch beliebige Gemische oder Racemate verwendet werden.

Die Bezeichnung "α" bzw. "β" bedeutet in Übereinstimmung mit der üblichen Nomenklatur, dass die Aminogruppe durch ein bzw. zwei Kohlenstoffatome von der Carboxylgruppe getrennt ist.

Es eignen sich N-Mono-C₁-C₄-alkyl-aminocarbonsäuren und N,N-Di-C₁-C₄-alkyl-aminocarbonsäuren, insbesondere N-Mono-C₁-C₄-alkyl-α-aminocarbonsäuren und N,N-Di-C₁-C₄-alkyl-α-aminocarbonsäuren. Hierzu zählen beispielsweise N,N-Dimethylglycin oder N-Methylalanin.

Geeignet sind außerdem α-Aminosäuren, worin das α-Kohlenstoffatom nur von Wasserstoff verschiedene Substituenten trägt, wie z. B. 2-Aminoisobuttersäure.

Als Amin (A) eignen sich alle Amine oder Kombinationen von Aminen, die üblicherweise zur Entfernung von sauren Gasen aus Fluidströmen verwendet werden. Geeignete Amine zeichnen sich im Allgemeinen durch einen Siedepunkt bei Normaldruck (1,013 bar absoluter Druck) von wenigstens 120 °C aus. Vorzugsweise weisen die Amine (A) einen Dampfdruck bei 20 °C von nicht mehr als 0,02 bar absolut auf. Es sind in der Regel gesättigte Verbindungen, die neben einem oder mehreren Stickstoffatomen und Kohlenwasserstoffresten ein oder mehrere Sauerstoffatome in Form von Hydroxylgruppen und/oder in Etherbindung enthalten.

Zu den geeigneten Aminen (A) zählen insbesondere:
Alkanolamine (Aminoalkohole) wie
   2-Aminoethanol (Monoethanolamin, MEA), N,N-Bis(2-hydroxyethyl)amin (Diethanolamin, DEA), N,N-Bis(2-hydroxypropyl)amin (Diisopropanolamin, DIPA), Tris(2-hydroxyethyl)amin (Triethanolamin, TEA), Tributanolamin, Bis(2-hydroxyethyl)-methylamin (Methyldiethanolamin, MDEA), 2-Diethylaminoethanol (Diethylethanolamin, DEEA), 2-Dimethylaminoethanol (Dimethylethanolamin, DMEA), 3-Dimethylamino-1-propanol (N,N-Dimethylpropanolamin), 3-Diethylamino-1-propanol, 2-Diisopropylaminoethanol (DIEA), N,N-Bis(2-hydroxypropyl)methylamin (Methyldiisoprapanolamin, MDI-PA), 2-Amino-2-methyl-1-propanol (AMP), 1-Amino-2-methyl-propan-2-ol, 2-Amino-1-butanol (2-AB);
Aminoether wie
   2-(2-Aminoethoxy)ethanol (AEE), 2-(2-tert-Butylaminoethoxy)ethanol (EETB), 3-Methoxypropyldimethylamin;
bistertiäre Diamine wie
   N,N,N',N'-Tetramethylethylendiamin, N,N-Diethyl-N',N'-dimethylethylendiamin, N,N,N',N'-Tetraethylethylendiamin, N,N,N',N'-Tetramethylpropandiamin (TMPDA), N,N,N',N'-Tetraethylpropandiamin (TEPDA), N,N-Dimethyl-N',N'-diethylethylendiamin (DMDEEDA), 1-Dimethylamino-2-dimethylaminoethoxyethan (Bis[2-(dimethylamino)-ethyl]ether);
cycloaliphatische Amine wie
   Cyclohexylmethyldimethylamin;
und Gemische davon.

Die alleinige Verwendung von Triethanolamin als Amin (A) ist nicht bevorzugt.

In einer bevorzugten Ausführungsform der vorliegenden Erfindung umfasst das Absorptionsmittel wenigstens ein Amin (A), das ausgewählt ist unter
A1) tertiären Aminen
   wie z. B. tertiäre Amine der allgemeinen Formeln

   N(R^{a})₂₋ₙ₍R^{b})₁₊ₙ oder (R^{a})₂₋ₙ(R^{b})ₙN-X-N(R^{a})₂₋ₘ(R^{b})ₘ

   worin R^{a} für eine Alkylgruppe steht, R^{b} für eine Hydroxyalkylgruppe steht, X für eine Alkylengruppe, die gegebenenfalls ein- oder mehrfach durch Sauerstoff unterbrochen ist, steht und n und m für eine ganze Zahl von 0 bis 2 steht. R^{a} steht beispielsweise für eine Alkylgruppe mit 1 bis 10 Kohlenstoffatomen (C₁-C₁₀-Alkyl), vorzugsweise mit 1 bis 6 Kohlenstoffatomen (C₁-C₆-Alkyl), und speziell mit 1 bis 4 Kohlenstoffatomen (C₁-C₄-Alkyl). R^{b} steht für eine Hydroxyalkylgruppe mit beispielsweise 2 bis 10 Kohlenstoffatomen (Hydroxy-C₂-C₁₀-alkyl), vorzugsweise für Hydroxy-C₂-C₆-alkyl und speziell für Hydroxy-C₂-C₄-alkyl. X steht für eine Alkylengruppe mit beispielsweise 1 bis 10, vorzugsweise 2 bis 6 und speziell 2, 3 oder 4 Kohlenstoffatomen, die gegebenenfalls ein- oder mehrfach, z. B. zweifach oder dreifach, durch Sauerstoff unterbrochen ist.
   Besonders bevorzugt ist das tertiäre Amin ausgewählt unter Tris(2-hydroxyethyl)amin (Triethanolamin, TEA), Tris(2-hydroxypropyl)amin (Triisopropanol),Tributanolamin, Bis(2-hydroxyethyl)-methylamin (Methyldiethanolamin, MDEA), 2-Diethylaminoethanol (Diethylethanolamin, DEEA), 2-Dimethylaminoethanoi (Dimethylethanolamin, DMEA), 3-Dimethylamino-1-propanol, 3-Diethylamino-1-propanol, 2-Diisopropylaminoethanol (DIEA), N,N-Bis(2-hydroxypropyl)methylamin (Methyldiisopropanolamin, MDIPA), N,N,N',N'-Tetramethylethylendiamin, N,N-Diethyl- N',N'-dimethylethylendiamin, N,N,N',N'-Tetraethylethylendiamin, N,N,N',N'-Tetramethylpropandiamin (TMPDA), N,N,N',N'-Tetraethylpropandiamin (TEPDA), N,N-Dimethyl-N',N'-diethylethylendiamin (DMDEEDA) und 2-(2-Dimethylaminoethoxy)-N,N-dimethylethanamin (Bis[2-(dimethylamino)ethyl]ether); und
A2) sterisch gehinderten Aminen, ausgewählt unter
   (i) Aminen mit einer primären Aminogruppe, die an ein tertiäres Kohlenstoffatom gebunden ist, wie 2-Amino-2-methyl-1-propanol (AMP)
   (ii) Aminen mit einer sekundären Aminogruppe, die an ein sekundäres oder tertiäres Kohlenstoffatom gebunden ist, und
   (iii) Aminen, worin ein tertiäres oder quartäres Kohlenstoffatom in β-Position zur Aminogruppe angeordnet ist, wie 1-Amino-2-methylpropan-2-ol.

   Neben dem tertiären und/oder sterisch gehinderten Amin enthält das Absorptionsmittel vorzugsweise wenigstens einen Aktivator. Der Aktivator ist üblicherweise ein primäres oder sekundäres Amin und beschleunigt die Kohlendioxid-Aufnahme durch intermediäre Bildung einer Carbamatstruktur. Der Aktivator ist bevorzugt ausgewählt unter
C1) 5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können, wie Piperazin, 2-Methylpiperazin, N-Methylpiperazin, N-Ethylpiperazin, N-Aminoethylpiperazin, Homopiperazin, Piperidin und Morpholin,
C2) primären oder sekundären Alkanolaminen,
   wie 2-Aminoethanol (Monoethanolamin, MEA), N,N-Bis(2-hydroxyethyl)amin (Diethanolamin, DEA), N,N-Bis(2-hydroxypropyl)amin (Diisopropanolamin, DIPA), 2-(Methylamino)ethanol, 2-(Ethylamino)ethanol, 2-(n-Butylamino)ethanol, 2-Amino-1-butanol (2-AB), 3-Amino-1-propanol und 5-Amino-1-pentanol,
C3) Alkylendiaminen der Formel

   H₂N-R²-NH₂,

   worin R² für C₂-C₆-Alkylen steht,
   wie Hexamethylendiamin, 1,4-Diaminobutan, 1,3-Diaminopropan, 2,2-Dimethyl-1,3-diaminopropan,
   Alkylendiaminen der Formel

   R¹-NH-R²-NH₂

   worin R¹ für C₁-C₆-Alkyl steht und R² für C₂-C₆-Alkylen steht,
   wie 3-Methylaminopropylamin,

   (R¹)₂N-R²-NH₂

   worin R¹ für C₁-C₆-Alkyl steht und R² für C₂-C₆-Alkylen steht,
   3-(Dimethylamino)propylamin (DMAPA) und 3-(Diethylamino)propylamin,
C4) Polyalkylenpolyaminen
   wie Diethylentriamin, Triethylentetramin und Tetraethylenpentamin.

Beispiele bevorzugter Aktivatoren sind Piperazin, 2-Methylpiperazin, N-Methylpiperazin, Homopiperazin, Piperidin und Morpholin sowie 3-Methylaminopropylamin.

Weitere geeignete Aktivatoren sind Tris(3-aminopropyl)amin, Tris(2-aminoethyl)amin, 2-(2-Aminoethoxy)ethanol, N-(2-Hydroxyethyl)ethylendiamin und N,N'-Bis(2-hydroxyethyl)ethylendiamin.

Im Allgemeinen beträgt das Gewichtsverhältnis des unter Aminen A1) und A2) ausgewählten Amins (A) zum Aktivator 1:1 bis 50:1, vorzugsweise 1:1 bis 25:1.

Wenn man als Komponente (B) N-Mono-C₁-C₄-alkyl-aminocarbonsäuren verwendet, können diese aufgrund ihrer sekundären Aminofunktion selbst als Aktivator wirken und die Mitverwendung eines separaten Aktivators kann entbehrlich sein. Beispiele sind N-Methylalanin, N-Methylglycin (Sarkosin)und N-Methylaminoisobuttersäure.

In einer weiteren bevorzugten Ausführungsform der vorliegenden Erfindung umfasst das Absorptionsmittel wenigstens ein Amin (A), das ausgewählt ist unter
A'1) 5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können,
   wie Piperazin, 2-Methylpiperazin, N-Methylpiperazin, N-Ethylpiperazin, N-Aminoethylpiperazin, Homopiperazin, Piperidin und Morpholin,
A'2) primären oder sekundären Alkanolaminen,
   wie 2-Aminoethanol (Monoethanolamin, MEA), N,N-Bis(2-hydroxyethyl)amin (Diethanolamin, DEA), N,N-Bis(2-hydroxypropyl)amin (Diisopropanolamin, DIPA), 2-(Methylamino)ethanol, 2-(Ethylamino)ethanol, 2-(n-Butylamino)ethanol, 2-Amino-1-butanol (2-AB), 3-Amino-1-propanol und 5-Amino-1-pentanol,
A'3) Alkylendiaminen der Formel
   H₂N-R²-NH₂,
   worin R² für C₂-C₆-Alkylen steht,
   wie Hexamethylendiamin, 1,4-Diaminobutan, 1,3-Diaminopropan, 2,2-Dimethyl-1,3-diaminopropan,
   Alkylendiaminen der Formel
   R¹-NH-R²-NH₂
   worin R¹ für C₁-C₆-Alkyl steht und R² für C₂-C₆-Alkylen steht,
   wie 3-Methylaminopropylamin,
   (R¹)₂N-R²-NH₂
   worin R¹ für C₁-C₆-Alkyl steht und R² für C₂-C₆-Alkylen steht,
   3-(Dimethylamino)propylamin (DMAPA) und 3-(Diethylamino)propylamin,
A'4) Polyalkylenpolyaminen,
   wie Diethylentriamin, Triethylentetramin und Tetraethylenpentamin,
A'5) Aminoethern
   wie 2-(2-Aminoethoxy)ethanol (AEE), 2-(2-tert-Butylaminoethoxy)ethanol (EETB) und 3-Methoxypropyldimethylamin

Wenn das Amin (A) unter Aminen A'1), A'2), A'3), A'4) und A'5) ausgewählt ist, eignet sich in einer Ausführungsform als Komponente (B) insbesondere N-Di-C₁-C₄-alkyl-aminocarbonsäuren. Beispiele bevorzugter N,N-disubstituierter Aminocarbonsäuren sind N,N-Dimethylglycin, 3-Dimethylaminopropionsäure und Dimethylaminoisobuttersäure. Ebenfalls eignen sich insbesondere α-Aminosäuren, worin das α-Kohlenstoffatom nur von Wasserstoff verschiedene Substituenten trägt, wie z.B. 2-Aminoisobuttersäure (2-Methylalanin).

Wenn das Amin (A) unter Aminen A'1), A'2), A'3), A'4) und A'5) ausgewählt ist, eignet sich in einer anderen Ausführungsform als Komponente (B) die N-monosubstituierte Aminocarbonsäure. Derartige Absorptionsmittel weisen einen besonders schnellen CO₂-Stoffübergang auf. Sie können für Anwendungen bevorzugt sein, in denen das zu behandelnde Gas einen sehr niedrigen CO₂-Partialdruck aufweist und/oder eine CO₂-Entfernung auf extrem niedrige Restkonzentrationen angestrebt wird.

Die Amine werden in Form ihrer wässrigen Lösungen eingesetzt. Das Absorptionsmittel kann zusätzlich physikalische Lösungsmittel enthalten, die z. B. ausgewählt sind unter Cyclotetramethylensulfon (Sulfolan) und dessen Derivaten, aliphatischen Säureamiden (Acetylmorpholin, N-Formylmorpholin), N-alkylierten Pyrrolidonen und entsprechenden Piperidonen, wie N-Methylpyrrolidon (NMP), Propylencarbonat, Methanol, Dialkylethern von Polyethylenglykolen und Gemischen davon.

Das Absorptionsmittel kann weitere funktionelle Bestandteile enthalten, wie Stabilisatoren, insbesondere Antioxidantien, vgl. z. B. die DE 102004011427, oder Korrosionsinhibitoren.

Sofern vorhanden, werden beim erfindungsgemäßen Verfahren neben Kohlendioxid üblicherweise auch andere Sauergase, wie z. B, H₂S, SO₂, CS₂, HCN, COS, NO₂, HCl, Disulfide oder Mercaptane, aus dem Gasstrom entfernt.

Das erfindungsgemäße Verfahren bzw. Absorptionsmittel ist geeignet zur Behandlung von Fluiden, insbesondere Gasströmen aller Art. Fluide, welche die sauren Gase enthalten, sind einerseits Gase, wie Erdgas, Synthesegas, Koksofengas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das erfindungsgemäße Verfahren bzw. Absorptionsmittel ist zur Behandlung von kohlenwasserstoffhaltigen Fluidströmen geeignet. Die enthaltenen Kohlenwasserstoffe sind z. B. aliphatische Kohlenwasserstoffe, wie C₁-C₄-Kohlenwasserstoffe, wie Methan, oder aromatische Kohlenwasserstoffe wie Benzol, Toluol oder Xylol.

Bei dem Gasstrom kann es sich auch um einen Gasstrom handeln, der auf folgende Weise gebildet wird:
a) Oxidation organischer Substanzen, z. B. Rauchgase (flue gas),
b) Kompostierung und Lagerung organische Substanzen enthaltender Abfallstoffe, oder
c) bakterielle Zersetzung organischer Substanzen.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organischen Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet. Die bakterielle Zersetzung erfolgt z. B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Daneben kann das erfindungsgemäße Verfahren natürlich auch angewendet werden, um unverbrannte fossile Gase, wie Erdgas, z. B. so genannte Coal-seam-Gase, d. h. bei der Förderung von Kohle anfallende Gase; die gesammelt und komprimiert werden, zu behandeln.

Im Allgemeinen enthalten diese Gasströme bei Normalbedingungen weniger als 50 mg/m³ Schwefeldioxid.

Zur Durchführung des erfindungsgemäßen Verfahrens geeignete Vorrichtungen umfassen wenigstens eine Waschkolonne, z. B. Füllkörper, Packungs- und Bodenkolonnen, und/oder andere Absorber wie Membrankontaktoren, Radialstromwäscher, Strahlwäscher, Venturi-Wäscher und Rotations-Sprühwäscher. Die Behandlung des Gasstroms mit dem Absorptionsmittel erfolgt dabei bevorzugt in einer Waschkolonne im Gegenstrom. Der Gasstrom wird dabei im Allgemeinen in den unteren Bereich und das Absorptionsmittel in den oberen Bereich der Kolonne eingespeist.

Geeignet zur Durchführung des erfindungsgemäßen Verfahrens sind auch Waschkolonnen aus Kunststoff, wie Polyolefinen oder Polytetrafluorethylen, oder Waschkolonnen, deren innere Oberfläche ganz oder teilweise mit Kunststoff oder Gummi ausgekleidet ist. Weiterhin eignen sich Membrankontaktoren mit Kunststoffgehäuse.

Die Temperatur des Absorptionsmittels beträgt im Absorptionsschritt im Allgemeinen etwa 30 bis 100 °C, bei Verwendung einer Kolonne beispielsweise 30 bis 70 °C am Kopf der Kolonne und 40 bis 100 °C am Boden der Kolonne. Es wird ein an sauren Gasbestandteilen armes, d. h. ein an diesen Bestandteilen abgereichertes Produktgas (Beigas) und ein mit sauren Gasbestandteilen beladenes Absorptionsmittel erhalten.

Im Allgemeinen regeneriert man das beladene Absorptionsmittel durch
a) Erwärmung, z. B. auf 70 bis 110 °C,
b) Entspannung, oder
c) Strippen mit einem inerten Fluid,
oder eine Kombination zweier oder aller dieser Maßnahmen.

In der Regel wird das beladene Absorptionsmittel zur Regeneration erwärmt und das freigesetzte Kohlendioxid wird z. B. in einer Desorptionskolonne abgetrennt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Kohlendioxid erfolgen. Der erhaltene gas-flüssig-gemischtphasige Strom wird in ein Phasentrenngefäß geleitet, aus dem das Kohlendioxid abgezogen wird; die Flüssigphase wird zur vollständigen Regeneration des Absorptionsmittels in die Desorptionskolonne geleitet.

Vielfach wird das in der Desorptionskolonne freigesetzte Kohlendioxid anschließend verdichtet und z. B. einem Drucktank oder einer Sequestrierung zugeführt. In diesen Fällen kann es vorteilhaft sein, die Regeneration des Absorptionsmittels bei einem höheren Druck, z. B. 2 bis 10 bar, vorzugsweise 2,5 bis 7 bar durchzuführen. Das beladene Absorptionsmittel wird hierzu mittels einer Pumpe auf den Regenerationsdruck verdichtet und in die Desorptionskolonne eingebracht. Das Kohlendioxid fällt auf diese Weise auf einem höheren Druckniveau an. Die Druckdifferenz zum Druckniveau des Drucktanks ist geringer und man kann unter Umständen eine Kompressionsstufe einsparen. Ein höherer Druck bei der Regeneration bedingt eine höhere Regenerationstemperatur. Bei höherer Regenerationstemperatur kann eine geringere Restbeladung des Absorptionsmittels erreicht werden. Die Regenerationstemperatur ist in der Regel nur durch die thermische Stabilität des Absorptionsmittels begrenzt.

Sofern es sich bei dem zu behandelnden Gas um ein Rauchgas handelt, wird dieses vor der erfindungsgemäßen Absorptionsmittel-Behandlung vorzugsweise einer Wäsche mit einer wässrigen Flüssigkeit, insbesondere mit Wasser, unterzogen, um das Rauchgas abzukühlen und zu befeuchten (quenchen). Bei der Wäsche können auch Stäube oder gasförmige Verunreinigungen wie Schwefeldioxid entfernt werden.

Die Erfindung wird anhand der beigefügten Figuren näher erläutert.
Fig. 1 ist eine schematische Darstellung einer zur Durchführung des erfindungsgemäßen Verfahrens geeigneten Anlage, die sich beispielsweise zur Rauchgasbehandlung eignet.
Figur 2 zeigt schematisch eine Vorrichtung zur Durchführung des erfindungsgemäßen Verfahrens mit einer Entspannungsstufe und einer Desorptionsstufe, wie sie zur erfindungsgemäßen Behandlung von Erdgas geeignet ist.

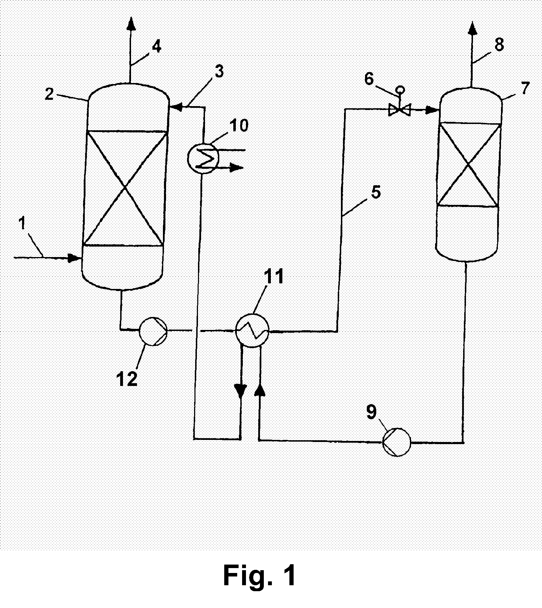

Gemäß Fig. 1 wird über eine Zuleitung 1 ein geeignet vorbehandeltes, Kohlendioxid enthaltendes Gas in einem Absorber 2 mit dem regenerierten Absorptionsmittel, das über die Absorptionsmittelleitung 3 zugeführt wird, im Gegenstrom in Kontakt gebracht. Das Absorptionsmittel entfernt Kohlendioxid durch Absorption aus dem Gas; dabei wird über eine Abgasleitung 4 ein an Kohlendioxid armes Reingas gewonnen. Der Absorber 2 kann oberhalb des Absorptionsmitteleintritts Rückwaschböden oder Rückwaschsektionen, die vorzugsweise mit Packungen ausgerüstet sind, aufweisen (nicht dargestellt), wo mit Hilfe von Wasser oder Kondensat mitgeführtes Absorptionsmittel aus dem CO₂-abgereicherten Gas abgetrennt wird. Die Flüssigkeit auf dem Rückwaschboden kann geeigneterweise über einen externen Kühler recycliert werden.

Über eine Absorptionsmittelleitung 5, eine Pumpe 12, einen Solvent-Solvent-Wärmetauscher 11, in dem das mit Sauergas beladene Absorptionsmittel mit der Wärme des aus dem Sumpf der Desorptionskolonne 7 austretenden, regenerierten Absorptionsmittels aufgeheizt wird, und ein Drosselventil 6 wird das mit Kohlendioxid beladene Absorptionsmittel einer Desorptionskolonne 7 zugeleitet. Im unteren Teil der Desorptionskolonne 7 wird das beladene Absorptionsmittel mittels eines (nicht dargestellten) Aufheizers erwärmt und regeneriert. Das dabei freigesetzte Kohlendioxid verlässt die Desorptionskolonne 7 über die Abgasleitung 8. Die Desorptionskolonne 7 kann oberhalb des Absorptionsmitteleintritts Rückwaschböden oder Rückwaschsektionen, die vorzugsweise mit Packungen ausgerüstet sind, aufweisen (nicht dargestellt), wo mit Hilfe von Wasser oder Kondensat mitgeführtes Absorptionsmittel aus dem freigesetzten CO₂ abgetrennt wird. In der Leitung 8 kann ein Wärmetauscher mit Kopfverteiler oder Kondensator vorgesehen sein. Das regenerierte Absorptionsmittel wird anschließend mittels einer Pumpe 9 über den Solvent-Solvent-Wärmetauscher 11, in dem das regenerierte Absorptionsmittel das mit Sauergas beladenen Absorptionsmittel aufheizt und selbst dabei abkühlt, und einen Wärmetauscher 10 der Absorptionskolonne 2 wieder zugeführt. Um die Akkumulierung von absorbierten Substanzen, die bei der Regenerierung nicht oder unvollständig ausgetrieben werden, oder von Zersetzungsprodukten im Absorptionsmittel zu vermeiden, kann man einen Teilstrom des aus der Desorptionskolonne 7 abgezogenen Absorptionsmittels einem Verdampfer zuführen, in dem schwerflüchtige Neben- und Zersetzungsprodukte als Rückstand anfallen und das reine Absorptionsmittel als Brüden abgezogen wird. Die kondensierten Brüden werden wieder dem Absorptionsmittelkreislauf zugeführt. Zweckmäßigerweise kann man dem Teilstrom eine Base, wie Kaliumhydroxid, zusetzen, welches z. B. mit Sulfat- oder Chloridionen schwerflüchtige Salze bildet, die zusammen mit dem Verdampferrückstand dem System entzogen werden.

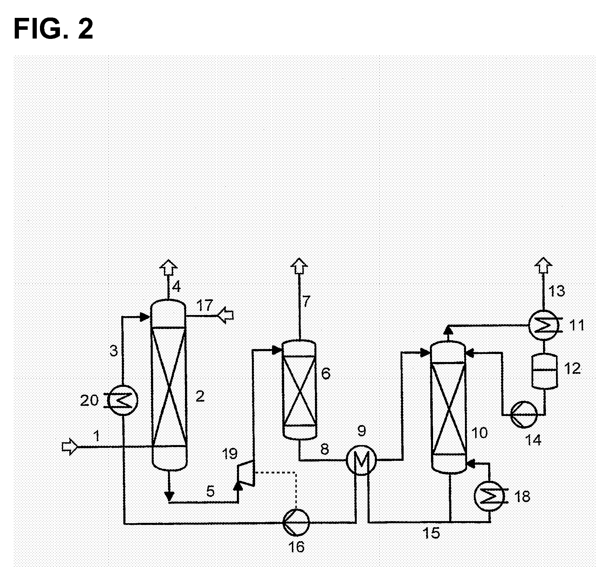

Gemäß Fig. 2 wird das Feedgas über Leitung 1 in den unteren Bereich des Absorbers 2 eingespeist. Das Absorptionsmittel wird über die Leitung 3 auf den Kopf des Absorbers 2 im Gegenstrom zu dem Feedgas aufgegeben. Das an sauren Gasen abgereicherte Gas verlässt den Absorber 2 über Kopf (Leitung 4). Das mit sauren Gasen angereicherte Absorptionsmittel verlässt den Absorber 2 am Boden über Leitung 5 und wird über eine Entspannungsturbine 19 in den oberen Bereich der Hochdruck-Entspannungskolonne 6 eingeleitet, die im Allgemeinen bei einem Druck betrieben wird, der oberhalb des CO₂-Partialdrucks des dem Absorber zugeführten Rohgases liegt. Bei der Entspannung werden der größte Teil der gelösten nicht-sauren Gase sowie ein kleiner Teil der sauren Gase freigesetzt. Diese Gase werden über Leitung 7 aus der Hochdruck-Entspannungskolonne 6 über Kopf ausgeschleust. Die an der Entspannungsturbine 19 anfallende Energie kann zum Betrieb der Pumpe 16 verwendet werden.

Das Absorptionsmittel, das nach wie vor mit dem Großteil der sauren Gase beladen ist, verlässt die Hochdruck-Entspannungskolonne über Leitung 8 und wird im Wärmetauscher 9 durch indirekten Wärmetausch mit regeneriertem Absorptionsmittel aufgeheizt, das über die Leitung 15 herangeführt wird.

Das aufgeheizte beladene Absorptionsmittel wird in den oberen Bereich einer Desorberkolonne 10 eingeleitet. Die Kolonne 10 verfügt über eine indirekte Sumpfbeheizung über den Wärmetauscher 18. In der Kolonne 10 werden ein Teil des CO₂ und H₂S durch Flashen freigesetzt, der Rest wird im unteren Teil der Kolonne 10 praktisch vollständig durch Strippen ausgetrieben. Am Kopf der Kolonne 10 ist ein Rückflusskühler 11 mit einem Auffangbehälter 12 vorgesehen, um die freigesetzten sauren Gase zu kühlen und einen Teil des Dampfes zu kondensieren. Die Hauptmenge des sauren Gases verlässt den Rückflusskühler 11 über Leitung 13. Das Kondensat wird mittels Pumpe 14 auf den Kopf der Kolonne 10 zurückgepumpt. Das regenerierte Absorptionsmittel verlässt die Kolonne 10 am Boden über Leitung 15 und wird über den Wärmetauscher 9 mittels Pumpe 16 über Leitung 3 auf den Kopf des Absorbers 2 aufgegeben. Über Leitung 17 kann Frischwasser zum Ausgleich des mit den Gasen ausgetragenen Wassers eingespeist werden.

### Beispiel: CO₂-Aufnahmekapazität und Regenerations-Energiebedarf

Die im Folgenden dargestellten Ergebnisse beruhen auf Gleichgewichtsmessungen bei 40 °C und 120°C der folgenden Systeme:

CO₂/N,N-Dimethylglycin/MEA (Monoethanolamin)/Wasser

CO₂/2-Methylalanin (α-Aminoisobuttersäure)/MEA/Wasser

### Diese Messungen wurden wie folgt durchgeführt:

In einem Glas-Druckgefäß (Volumen = 110 cm³ bzw. 230 cm³) wurde eine definierte Menge des Amin-Wasser-Gemisches bzw. Amin-Aminosäure-Wasser-Gemisches vorgelegt, evakuiert und bei konstanter Temperatur Kohlendioxid stufenweise über ein definiertes Gasvolumen zudosiert. Die gelöste Kohlendioxid-Masse in der Flüssigphase wurde nach Gasraumkorrektur der Gasphase berechnet.

Die Gleichgewichtsdaten für das System CO₂/MEA/Wasser wurden mit dem Elektrolyt-NRTL Ansatz nach Chen et al. (Chen C.C., Evans, L.B. , A Local Composition Model for the Excess Gibbs Energy of aqueous electrolyte solutions AICHE J., 1986, 32(3), 444-454; die Parameter wurden an Messdaten angepasst) berechnet.

Beruhend auf den Gleichgewichtsdaten wurde für die Systeme eine Auswertung durchgeführt, um die Kapazität der verschiedenen Lösungsmittelgemische für die Aufnahme von CO₂ zu ermitteln und die Tendenz für den Energieverbrauch bei der Regeneration der Lösungsmittel in einer Strippkolonne angeben zu können.

Dabei wurde wie folgt vorgegangen:
Es wurde für alle Lösungsmittelgemische angenommen, dass sie in einem Absorber verwendet werden, der bei einem Gesamtdruck von einem bar mit einem CO₂-haltigen Rauchgas von 0,13 bar CO₂-Partialdruck (=13% CO₂-Gehalt) beaufschlagt wird. Für die Abschätzung wurde angenommen, dass im Absorbersumpf eine Temperatur von 40°C vorliegt. Bei der Regeneration herrschen im Desorbersumpf etwa 120°C. Für die Abschätzung der Kapazität wird angenommen, dass im Absorbersumpf Gleichgewicht erreicht wird, d. h. der Gleichgewichtspartialdruck ist gleich dem Feedgas-Partialdruck von 13 kPa. Die Desorption wird üblicherweise etwa bei 200 kPa betrieben. Bei 120°C besitzt reines Wasser einen Partialdruck von etwa 198 kPa. In einer Aminlösung ist der Partialdruck von Wasser etwas geringer, deshalb wird hier ein CO₂-Partialdruck von 5 kPa im Desorbersumpf angenommen. Auch hier wird das Erreichen des Gleichgewichts als Näherung unterstellt. Die Kapazität der verschiedenen Lösungsmittel wurde somit ermittelt
   a) aus der Beladung in mol CO₂ pro kg Lösung am Schnittpunkt der 40°-Gleichgewichtskurve mit der Linie konstanten Feedgas-CO₂-Partialdrucks 13 kPa (beladene Lösung am Absorbersumpf im Gleichgewicht) und
   b) aus dem Schnittpunkt der 120°- Gleichgewichtskurve mit der Linie des konstanten CO₂-Partialdrucks von 5 kPa (regenerierte Lösung am Desorbersumpf im Gleichgewicht).

Die Differenz beider Beladungen ist die Kreislaufkapazität des jeweiligen Lösungsmittels. Eine große Kapazität bedeutet, dass weniger Lösungsmittel im Kreis gefahren werden muss und damit die Apparate wie z. B. Pumpen, Wärmetauscher aber auch die Rohrleitungen kleiner dimensioniert werden können. Weiterhin beeinflusst die Umlauf menge auch die zum Regenerieren notwendige Energie.

Ein weiteres Maß dafür ist die Steigung der Arbeitsgeraden der Strippkolonne. Diese ist proportional dem Verhältnis von Flüssigkeitsmenge L zu Gasmenge G im Desorber, L/G. Diese Arbeitsgerade ist im Sumpf des Desorbers in der Regel sehr nahe der Gleichgewichtslinie, so dass in erster Näherung die Steigung der Gleichgewichtskurve mit der Steigung der Arbeitslinie gleichgesetzt werden kann. Da am Sumpf des Desorbers das meiste CO₂ bereits herausgestrippt ist, entspricht die Gasmenge der zum Strippen der Lösung notwendigen Dampfmenge, die im Verdampfer erzeugt werden muss. Bei konstanter Flüssigkeitsbelastung folgt für ein Lösungsmittel mit einer großen Steigung der Gleichgewichtskurve eine geringere notwendige Strippdampfmenge. Die Energie zur Erzeugung des Strippdampfes stellt die wesentliche Energie des CO₂-Absorptionsprozesses dar. Für eine erste Abschätzung ist die Steigung der Gleichgewichtskurve im Strippersumpf für relative Vergleiche von Lösungsmitteln jedoch aussagekräftig.

Besser noch als die Steigung ist die reziproke Steigung geeignet, da sie direkt proportional zur benötigten Dampfmenge pro Kilogramm Lösungsmittel ist. Dividiert man diese reziproke Steigung durch die Kapazität des Lösungsmittel so erhält man einen Vergleichswert, der direkt eine relative Aussage über die benötigte Dampfmenge pro absorbierter CO₂-Menge ermöglicht. Diese Werte sind normiert in Tabelle 1 dargestellt.

In Tabelle 1 sind die Werte auf den Wert der MEA-Mischung normiert. Man erkennt, dass für die erfindungsgemäßen Absorptionsmittel der Dampfbedarf bei vergleichbarer Kapazität (bezogen auf eine entsprechende MEA-Lösung) geringer ist.

**Tabelle 1**

| Absorptionsmittel | Relative Kapazität | Relativer Dampfmengenbedarf |
|---|---|---|
| | [%] | [%] |
| MEA (26%)/ 2-Methylalanin (11%) | 100 | 66 |
| MEA (24%)/ N,N-Dimethylglycin (20%) | 100 | 56 |
| MEA | 100 | 100 |

## Patentansprüche

1. Absorptionsmittel zum Entfernen von Kohlendioxid aus einem Fluidstrom, umfassend eine wässrige Lösung
(A) wenigstens eines Amins und
(B) wenigstens einer Aminocarbonsäure,
wobei die wässrige Lösung weniger als 5 Gew.-% anorganische basische Salze enthält und die Aminocarbonsäure unter N-Mono-C₁-C₄-alkyl-aminocarbonsäuren und N,N-Di-C₁-C₄-alkyl-aminocarbonsäuren ausgewählt ist, oder die Aminocarbonsäure eine α-Aminocarbonsäure ist, worin das α-Kohlenstoffatom nur von Wasserstoff verschiedene Substituenten trägt.

2. Absorptionsmittel nach Anspruch 1, enthaltend
(A) 10 bis 65 Gew.-% Amin oder Kombination von Aminen und
(B) 1 bis 40 Gew.-% Aminocarbonsäure.

3. Absorptionsmittel nach Anspruch 1 oder 2, umfassend wenigstens ein Amin (A), das ausgewählt ist unter
A1) tertiären Aminen,
A2) sterisch gehinderten Aminen, ausgewählt unter (i) Aminen mit einer primären Aminogruppe, die an ein tertiäres Kohlenstoffatom gebunden ist, (ii) Aminen mit einer sekundären Aminogruppe, die an ein sekundäres oder tertiäres Kohlenstoffatom gebunden ist, und (iii) Aminen, worin ein tertiäres oder quartäres Kohlenstoffatom in β-Position zur Aminogruppe angeordnet ist.

4. Absorptionsmittel nach Anspruch 3, wobei das tertiäre Amin ausgewählt ist unter Tris(2-hydroxyethyl)amin, Tris(2-hydroxypropyl)amin, Tributanolamin, Bis(2-hydroxyethyl)-methylamin, 2-Diethylaminoethanol, 2-Dimethylaminoethanol, 3-Dimethylamino-1-propanol, 3-Diethylamino-1-propanol, 2-Diisopropylaminoethanol, N,N-Bis(2-hydroxypropyl)methylamin (Methyldiisopropanolamin, MDI-PA), N,N,N',N'-Tetramethylethylendiamin, N,N-Diethyl- N',N'-dimethylethylendiamin, N,N,N',N'-Tetraethylethylendiamin, N,N,N',N'-Tetramethylpropandiamin, N,N,N',N'-Tetraethylpropandiamin, N,N-Dimethyl-N',N'-diethylethylendiamin und 2-(2-Dimethylaminoethoxy)-N,N-dimethylethanamin.

5. Absorptionsmittel nach Anspruch 3, wobei das sterisch gehinderte Amin ausgewählt ist unter 2-Amino-2-methyl-1-propanol und 1-Amino-2-methylpropan-2-ol.

6. Absorptionsmittel nach einem der Ansprüche 3 bis 5, außerdem umfassend wenigstens ein primäres oder sekundäres Amin als Aktivator.

7. Absorptionsmittel nach Anspruch 6, wobei der Aktivator ausgewählt ist unter
C1) 5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können,
C2) primären oder sekundären Alkanolaminen,
C3) Alkylendiaminen der Formel
H₂N-R²-NH₂,
R¹-NH-R²-NH₂
oder
(R¹)₂N-R²-NH₂
worin R¹ für C₁-C₆-Alkyl steht und R² für C₂-C₆-Alkylen steht,
C4) Polyalkylenpolyaminen.

8. Absorptionsmittel nach Anspruch 7, wobei der Aktivator ausgewählt ist unter
C1) Piperazin, 2-Methylpiperazin, N-Methylpiperazin, N-Ethylpiperazin, N-Aminoethylpiperazin, Homopiperazin, Piperidin und Morpholin,
C2) 2-Aminoethanol, N,N-Bis(2-hydroxyethyl)amin, N,N-Bis(2-hydroxypropyl)amin, 2-(Methylamino)ethanol, 2-(Ethylamino)ethanol, 2-(n-Butylamino)ethanol, 2-Amino-1-butanol, 3-Amino-1-propanol und 5-Amino-1-pentanol,
C3) Hexamethylendiamin, 1,4-Diaminobutan, 1,3-Diaminopropan, 2,2-Dimethyl-1,3-diaminopropan, 3-Methylaminopropylamin, 3-(Dimethylamino)-propylamin, 3-(Diethylamino)propylamin,
C4) Diethylentriamin, Triethylentetramin, Tetraethylenpentamin.

9. Absorptionsmittel nach einem der Ansprüche 3 bis 5, wobei es sich bei der Aminocarbonsäure um N-Methylalanin, N-Methylglycin, 2-Aminoisobuttersäure, N-Methylaminoisobuttersäure handelt.

10. Absorptionsmittel nach Anspruch 1 oder 2, umfassend wenigstens ein Amin (A), das ausgewählt ist unter
A'1) 5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können,
A'2) primären oder sekundären Alkanolaminen,
A'3) Alkylendiaminen der Formel
H₂N-R²-NH₂,
R¹-NH-R²-NH₂
oder
(R¹)₂N-R²-NH₂
worin R¹ für C₁-C₆-Alkyl steht und R² für C₂-C₆-Alkylen steht,
A'4) Polyalkylenpolyaminen,
A'5) Aminoethern.

11. Absorptionsmittel nach Anspruch 10, umfassend eine N,N-disubstituierte Aminocarbonsäure.

12. Absorptionsmittel nach Anspruch 11, wobei es sich bei der Aminocarbonsäure um N,N-Dimethylglycin, 3-Dimethylaminopropionsäure, Dimethylaminoisobuttersäure handelt.

13. Absorptionsmittel nach Anspruch 10, umfassend eine N-monosubstituierte Aminocarbonsäure.

14. Verfahren zum Entfernen von Kohlendioxid aus einem Fluidstrom, wobei man den Fluidstrom mit einem Absorptionsmittel nach einem der vorhergehenden Ansprüche in Kontakt bringt.

15. Verfahren nach Anspruch 14, wobei man das beladene Absorptionsmittel durch
a) Erwärmung,
b) Entspannung,
c) Strippen mit einem inerten Fluid,
oder eine Kombination zweier oder aller dieser Maßnahmen regeneriert.

## Claims

1. An absorption medium for removing carbon dioxide from a fluid stream, comprising an aqueous solution
(A) of at least one amine and
(B) at least one aminocarboxylic acid,
the aqueous solution comprising less than 5% by weight of inorganic basic salts and the aminocarboxylic acid being selected from N-mono-C₁-C₄-alkylaminocarboxylic acids and N,N-Di-C₁-C₄-alkylaminocarboxylic acids, or the aminocarboxylic acid being an α-aminocarboxylic acid in which the α-carbon atom only carries substituents different from hydrogen.

2. The absorption medium according to claim 1, comprising
(A) 10 to 65% by weight amine or combination of amines and
(B) 1 to 40% by weight aminocarboxylic acid.

3. The absorption medium according to claim 1 or 2, comprising at least one amine (A) which is selected from
A1) tertiary amines,
A2) sterically hindered amines selected from (i) amines having a primary amino group which is bound to a tertiary carbon atom, (ii) amines having a secondary amino group which is bound to a secondary or tertiary carbon atom, and (iii) amines in which a tertiary or quaternary carbon atom is arranged in β position to the amino group.

4. The absorption medium according to claim 3, wherein the tertiary amine is selected from tris(2-hydroxyethyl)amine, tris(2-hydroxypropyl)amine, tributanolamine, bis(2-hydroxyethyl)methylamine, 2-diethylaminoethanol, 2-dimethylaminoethanol, 3-dimethylamino-1-propanol, 3-diethylamino-1-propanol, 2-diisopropylaminoethanol, N,N-bis(2-hydroxypropyl)methylamine (methyldiisopropanolamine, MDIPA), N,N,N',N'-tetramethylethylenediamine, N,N-diethyl- N', N'-dimethylethylenediamine, N,N,N',N'-tetraethylethylenediamine, N,N,N',N'-tetramethylpropanediamine, N,N,N',N'-tetraethylpropanediamine, N,N-dimethyl-N',N'-diethylethylenediamine and 2-(2-dimethylaminoethoxy)-N,N-dimethylethanamine.

5. The absorption medium according to claim 3, wherein the sterically hindered amine is selected from 2-amino-2-methyl-1-propanol and 1-amino-2-methylpropan-2-ol.

6. The absorption medium according to one of claims 3 to 5, additionally comprising at least one primary or secondary amine as activator.

7. The absorption medium according to claim 6, wherein the activator is selected from
C1) 5-, 6- or 7-membered saturated heterocycles having at least one NH group in the ring, which can comprise in the ring one or two further heteroatoms selected from nitrogen and oxygen,
C2) primary or secondary alkanolamines,
C3) alkylenediamines of the formula
H₂N-R²-NH₂,
R¹-NH-R²-NH₂
or
(R¹) ₂N-R²-NH₂
where R¹ is C₁-C₆-alkyl and R² is C₂-C₆-alkylene,
C4) polyalkylenepolyamines.

8. The absorption medium according to claim 7, wherein the activator is selected from
C1) piperazine, 2-methylpiperazine, N-methylpiperazine, N-ethylpiperazine, N-aminoethylpiperazine, homopiperazine, piperidine and morpholine,
C2) 2-aminoethanol, N,N-bis(2-hydroxyethyl)amine, N,N-bis(2-hydroxypropyl)amine, 2-(methylamino)ethanol, 2-(ethylamino)ethanol, 2-(n-butylamino)ethanol, 2-amino-1-butanol, 3-amino-1-propanol and 5-amino-1-pentanol,
C3) hexamethylenediamine, 1,4-diaminobutane, 1,3-diaminopropane, 2,2-dimethyl-1,3-diaminopropane, 3-methylaminopropylamine, 3-(dimethylamino)propylamine, 3-(diethylamino)-propylamine,
C4) diethylenetriamine, triethylenetetramine, tetraethylenepentamine.

9. The absorption medium according to one of claims 3 to 5, wherein the aminocarboxylic acid is N-methylalanine, N-methylglycine, 2-aminoisobutyric acid, N-methylaminoisobutyric acid.

10. The absorption medium according to claim 1 to 2, comprising at least one amine (A) which is selected from
A'1) 5-, 6- or 7-membered saturated heterocycles having at least one NH group in the ring which can comprise in the ring one or two further heteroatoms selected from nitrogen and oxygen,
A'2) primary or secondary alkanolamines,
A'3) alkylenediamines of the formulae
H₂N-R²-NH₂,
R¹-NH-R²-NH₂
or
(R¹) ₂N-R²-NH₂
where R¹ is C₁-C₆-alkyl and R² is C₂-C₆-alkylene,
A'4) polyalkylenepolyamines,
A'5) aminoethers.

11. The absorption medium according to claim 10, comprising an N,N-disubstituted aminocarboxylic acid.

12. The absorption medium according to claim 11, wherein the aminocarboxylic acid is N,N-dimethylglycine, 3-dimethylaminopropionic acid, dimethylaminoisobutyric acid.

13. The absorption medium according to claim 10, comprising an N-monosubstituted aminocarboxylic acid.

14. A process for removing carbon dioxide from a fluid stream, which comprises bringing the fluid stream into contact with an absorption medium according to one of the preceding claims.

15. The process according to claim 14, wherein the loaded absorption medium is regenerated by
a) heating,
b) expansion,
c) stripping with an inert fluid,
or a combination of two or all of these measures.

## Revendications

1. Agent d'absorption destiné à l'élimination de dioxyde de carbone à partir d'un courant de fluide, comprenant une solution aqueuse
(A) d'au moins une amine et
(B) d'au moins un acide aminocarboxylique,
la solution aqueuse contenant moins de 5 % en poids de sels inorganiques basiques et l'acide aminocarboxylique étant choisi parmi des acides N-monoalkyl(C₁-C₄)-amino-carboxyliques et des acides N,N-dialkyl(C₁-C₄)-amino-carboxyliques, ou l'acide aminocarboxylique étant un acide α-aminocarboxylique dans lequel l'atome de carbone α ne porte que des substituants différents d'un atome d'hydrogène.

2. Agent d'absorption selon la revendication 1, contenant
(A) 10 à 65 % en poids d'amine ou d'association d'amines et
(B) 1 à 40 % en poids d'acide aminocarboxylique.

3. Agent d'absorption selon la revendication 1 ou 2, comprenant au moins une amine (A), qui est choisie parmi
A1) des amines tertiaires,
A2) des amines à encombrement stérique, choisies parmi (i) des amines comportant un groupe amino primaire qui est lié à un atome de carbone tertiaire, (ii) des amines comportant un groupe amino secondaire qui est lié à un atome de carbone secondaire ou tertiaire, et (iii) des amines dans lesquelles un atome de carbone tertiaire ou quaternaire se trouve en position par rapport au groupe amino.

4. Agent d'absorption selon la revendication 3, dans lequel l'amine tertiaire est choisie parmi la tris(2-hydroxyéthyl)amine, la tris(2-hydroxypropyl)-amine, la tributanolamine, la bis(2-hydroxyéthyl)-méthylamine, le 2-diéthylaminoéthanol, le 2-diméthyl-aminoéthanol, le 3-diméthylamino-1-propanol, le 3-diéthylamino-1-propanol, le 2-diisopropylamino-éthanol, la N,N-bis(2-hydroxypropyl)méthylamine (méthyldiisopropanolamine, MDI-PA), la N,N,N',N'-tétraméthyléthylènediamine, la N,N-diéthyl-N',N'-diméthyléthylènediamine, la N,N,N',N'-tétraéthyl-éthylènediamine, la N,N,N',N'-tétraméthylpropane-diamine, la N,N,N',N'-tétraéthylpropanediamine, la N,N-diméthyl-N',N'-diéthyléthylènediamine et la 2-(2-diméthylaminoéthoxy)-N,N-diméthyléthanamine.

5. Agent d'absorption selon la revendication 3, dans lequel l'amine à encombrement stérique est choisie parmi le 2-amino-2-méthyl-1-propanol et le 1-amino-2-méthylpropan-2-ol.

6. Agent d'absorption selon l'une quelconque des revendications 3 à 5, comprenant en outre au moins une amine primaire ou secondaire en tant qu'activateur.

7. Agent d'absorption selon la revendication 6, dans lequel l'activateur est choisi parmi
C1) des hétérocycles saturés à 5, 6 ou 7 chaînons, comportant au moins un groupe NH dans le cycle, qui peuvent contenir dans le cycle un ou deux autres hétéroatomes choisis parmi les atomes d'azote et d'oxygène,
C2) des alcanolamines primaires ou secondaires,
C3) des alkylènediamines de formule
H₂N-R²-NH₂,
R¹-NH-R²-NH₂
ou
(R¹) ₂N-R²-NH₂
où R¹ représente un groupe alkyle en C₁-C₆ et R² représente un groupe alkylène en C₂-C₆,
C4) des polyalkylènepolyamines.

8. Agent d'absorption selon la revendication 7, dans lequel l'activateur est choisi parmi
C1) la pipérazine, la 2-méthylpipérazine, la N-méthylpipérazine, la N-éthylpipérazine, la N-aminoéthyl-pipérazine, l'homopipérazine, la pipéridine et la morpholine,
C2) le 2-aminoéthanol, la N,N-bis(2-hydroxyéthyl)-amine, la N,N-bis(2-hydroxypropyl)amine, le 2-(méthylamino)éthanol, le 2-(éthylamino)éthanol, le 2-(n-butylamino)éthanol, le 2-amino-1-butanol, le 3-amino-1-propanol et le 5-amino-1-pentanol,
C3) l'hexaméthylènediamine, le 1,4-diaminobutane, le 1,3-diaminopropane, le 2,2-diméthyl-1,3-diaminopropane, la 3-méthylaminopropylamine, la 3-(diméthylamino)-propylamine, la 3-(diéthyl-amino)propylamine,
C4) la diéthylènetriamine, la triéthylènetétramine, la tétraéthylènepentamine.

9. Agent d'absorption selon l'une quelconque des revendications 3 à 5, dans lequel pour ce qui est de l'acide aminocarboxylique il s'agit de la N-méthyl-alanine, la N-méthylglycine, l'acide 2-amino-isobutyrique, l'acide N-méthylamino-isobutyrique.

10. Agent d'absorption selon la revendication 1 ou 2, comprenant au moins une amine (A), qui est choisie parmi
A'1) des hétérocycles saturés à 5, 6 ou 7 chaînons, comportant au moins un groupe NH dans le cycle, qui peuvent contenir dans le cycle un ou deux autres hétéroatomes choisis parmi les atomes d'azote et d'oxygène,
A'2) des alcanolamines primaires ou secondaires
A'3) des alkylènediamines de formule
H₂N-R²-NH₂,
R¹-NH-R²-NH₂
ou
(R¹) ₂N-R²-NH₂
où R¹ représente un groupe alkyle en C₁-C₆ et R² représente un groupe alkylène en C₂-C₆,
A'4) des polyalkylènepolyamines,
A'5) des aminoéthers.

11. Agent d'absorption selon la revendication 10, comprenant une acide aminocarboxylique N,N-disubstitué.

12. Agent d'absorption selon la revendication 11, dans lequel pour ce qui est de l'acide amino-carboxylique il s'agit de la N,N-diméthylglycine, l'acide 3-diméthylaminopropionique, l'acide diméthyl-amino-isobutyrique.

13. Agent d'absorption selon la revendication 10, comprenant un acide aminocarboxylique N-monosubstitué.

14. Procédé pour l'élimination de dioxyde de carbone d'un courant de fluide, dans lequel on met le courant de fluide en contact avec un agent d'absorption selon l'une quelconque des revendications précédentes.

15. Procédé selon la revendication 14, dans lequel on régénère l'agent d'absorption chargé par
a) chauffage,
b) détente,
c) stripage avec un fluide inerte,
ou une combinaison de deux ou de la totalité de ces moyens.
